# EUROPÄISCHE PATENTSCHRIFT

(11) **EP 3 024 886 B1**
(45) Veröffentlichungstag und Bekanntmachung des Hinweises auf die Patenterteilung: **26.12.2018**
(21) Anmeldenummer: 14742464.2
(22) Anmeldetag: 14.07.2014
(51) Int. Cl.: C08K 5/00, C08K 5/3435, C08K 5/5313

(54) **ZUSAMMENSETZUNG AUS EINEM THERMOPLASTISCHEN POLYMER UND EINER SYNERGISTISCHEN MISCHUNG AUS BESTIMMTEN AMINOETHERN UND FEINTEILIGEN PHOSPHINATEN**
COMPOSITION COMPRISING A THERMOPLASTIC POLYMER AND A SYNERGISTIC MIXTURE OF DETERMINED AMINO ETHERS AND FINELY-PARTICLED PHOSPHINATES
COMPOSITION COMPRENANT UN POLYMÈRE THERMOPLASTIQUE ET UN MÉLANGE SYNERGIQUE D'AMINOÉTHERS DÉTERMINÉS ET DE PHOSPHINATES À FINES PARTICULES

(30) Priorität: 26.07.2013 DE 102013012487
(43) Veröffentlichungstag der Anmeldung: 01.06.2016
(73) Patentinhaber: Clariant International Ltd, 4132 Muttenz (CH)
(72) Erfinder: HÖROLD, Sebastian, 86420 Diedorf (DE); ZÄH, Matthias, 86368 Gersthofen (DE)
(74) Vertreter: Jacobi, Carola
(86) Internationale Anmeldenummer: PCT/EP2014/001926
(87) Internationale Veröffentlichungsnummer: WO 2015/010775

(56) Entgegenhaltungen:
- WO-A1-2013/136285
- US-A1- 2010 324 182
- US-A1- 2011 237 715

## Beschreibung

Die nachfolgende Erfindung umfasst eine Zusammensetzung aus einem thermoplastischen Polymer und einer synergistischen Mischung aus bestimmten Aminoethern und feinteiligen Phosphinaten.

Die Zusammensetzung kann insbesondere als Flammschutzmittel für dünnwandige Materialien, bevorzugt für Polyolefinfolien und Polyolefinfasern verwendet werden.

Polyolefine werden zunehmend in Anwendungen eingesetzt, in denen Flammwidrigkeit erforderlich ist. Die Flammwidrigkeit wird heute üblicherweise durch den Zusatz von Brom- oder Phosphorverbindungen erreicht. Diese weisen allerdings auch recht starke Nachteile auf. Bromverbindungen setzen die Lichtstabilität der Olefine deutlich herab und können deshalb im Außenbereich nur sehr eingeschränkt verwendet werden. Phosphorhaltige Flammschutzmittel benötigen eine recht hohe Dosierung und sind zudem in dünnwandigen Anwendungen wie Fasern und Folien oft nicht wirksam.

Die US6,599,963A1 beschreibt polymere Substrate, die als Flammschutzsystem ein sterisch gehindertes Amin und ein bromiertes Flammschutzmitel enthalten. Die WO99/00450 beschreibt die Verwendung einer sterisch gehinderten Aminverbindung als Flammschutzmittel für Polymere.

Die WO2010/026230 beschreibt Mischungen aus cyclischen Phosphonaten, einer oder mehrerer 1,3,5 Triazinverbindungen und sterisch gehinderten Aminoethern. Es werden Polyethylenfolien beschreiben, die die Brandklasse DIN 4102 B2 bestehen. Nachteilig ist, dass keine transparenten Folien dargestellt werden können.

Die WO2011/117266 beschreibt polymere Substanzen, die ein Salz einer Phosphinsäure und ein Tetraalkypiperidin oder ein Tetraalkylpiperazin-Derivat enthalten. Mit 8% Flammschutzmittelzusatz wird in Polypropylen die Brandklasse V-2 erreicht. Aufgrund des hohen Füllgrades und der Teilchengröße des verwendeten Phosphinsäuresalzes ist die Mischung für Folien und Fasern nicht geeignet.

Aufgrund Ihrer chemischen Reaktivität, die für die Flammschutzwirkung bei hohen Temperaturen erforderlich ist, können Flammschutzmittel die Verarbeitungsstabilität von Kunststoffen beeinträchtigen. Es kann beispielsweise zu verstärktem Polymerabbau, zu Vernetzungsreaktionen, zu Ausgasungen oder Verfärbungen kommen. Effekte, die bei der Kunststoffverarbeitung ohne Flammschutzmittel eventuell gar nicht oder nur in abgeschwächter Form auftreten.

Die Einarbeitung der in der WO99/00450 beschriebenen sterisch gehinderten Amine in Folien oder Fasern ist insofern schwierig, als es bei der Einarbeitung zu Geruchs- und oder Verfärbungsproblemen kommt. Verbindungen mit geringem Molgewicht können zudem aus dem Kunststoff migrieren.

Es war daher Aufgabe der vorliegenden Erfindung, neue Zusammensetzungen bereitzustellen, in denen keine Migration beobachtet wird, die gute mechanische Werte zeigen, sich nicht verfärben, wichtige Brandklassen bestehen sowie hinreichende UV-Stabilität zeigen.

Die vorliegende Erfindung betrifft daher Zusammensetzungen, enthaltend als Komponente (A) ein feinteiliges Phosphinsäuresalz der Formel (I) und/oder Diphosphinsäuresalz der Formel (II) und/oder deren Polymere, 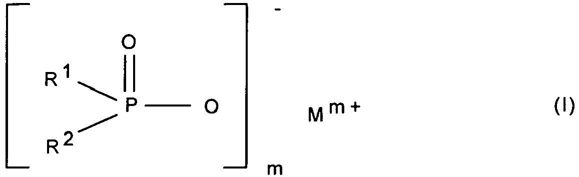 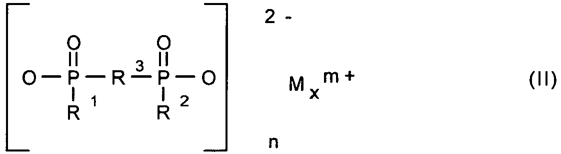 worin
R¹ R² gleich oder verschieden sind und Methyl, Ethyl, n-Propyl, iso-Propyl, n-Butyl, tert.-Butyl, n-Pentyl und/oder Phenyl bedeuten;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Fe, Zr, Ce, Bi, Sr, Mn, Li, Na, K und/oder eine protonierte Stickstoffbase;
m 1 bis 4; n 1 bis 4; x 1 bis 4 bedeuten,
mit einer Partikelgröße d₅₀ kleiner 20 µm;
als Komponent (B) einen Aminoether der Formel (III), 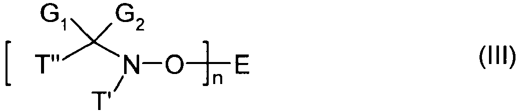 wobei
- n: kleiner oder gleich der Anzahl C-Atome in E sein kann und
- E: C₁- bis C₁₀₀₀₀₀₀-Alkyl oder C₅-C₆-Cycloalkyl bedeutet, wobei die Alkylkette Alkylsubstituenten, aromatische Substituenten und polare Gruppen als Substituenten enthalten kann, und durch Alkeneinheiten und/oder Heteroatome unterbrochen sein kann;
wobei
- G1 und G2: gleich oder verschieden sein können und unabhängig voneinander Wasserstoff, Halogen, NO₂, Cyano, CONR₅R₆, (R₉)COOR₄, C(O)-R₇, OR₈, SR₈, NHR₈, N(R₁₈)₂, Carbamoyl, Di(C₁-C₁₈-alkyl)-carbamoyl, C(=NR₅)(NHR₆), C₁-C₁₈-Alkyl; C₃-C₁₈-Alkenyl; C₃-C₁₈-Alkinyl, C₇-C₉-Phenylalkyl, C₃-C₁₂-Cycloalkyl oder C₂-C₁₂-Heterocycloalkyl; C₂-C₁₈-Alkyl unterbrochen von wenigstens einem O-Atom und/oder von
-NR₅-;
C₆-C₁₀-Aryl;
Phenyl oder Naphthyl, jeweils substituiert durch C₁-C₄-Alkyl, C₁-C₄-Alkoxy, C₁-C₄-Alkylthio, Halogen, Cyano, Hydroxy, Carboxy, COOR₂₁, C(O)-R₂₂, C₁-C₄-Alkylamino oder Di(C₁-C₄-alkyl)amino;
bedeuten; oder
- G1 und G2: zusammen mit C-Atom, an dem sie gebunden sind, einen C₃-C₁₂-Ring bilden;
- T': ist Wasserstoff, eine primäre C₁-C₁₈Alkyl-, eine sekundäre C₃-C₁₈Alkyl-, eine tertiäre C₄-C₁₈-Alkyl- oder eine Phenyl-Gruppe, jede davon unsubstituiert oder substituiert mit Halogen, OH, COOR₂₁ oder C(O)-R₂₂; oder C₅-C₁₂-Cycloalkyl oder C₅-C₁₂-Cycloalkyl unterbrochen durch wenigstens ein O oder -N(R₁₈)-; oder ein polycyclisches Alkylradikal mit 7 bis 18 C-Atomen, oder das gleiche Radikal, unterbrochen durch wenigstens ein -O- oder -N(R₁₈)-; oder T' ist C-(G₁)(G₂)-T";
- T": ist Wasserstoff, Halogen, NO₂, Cyano oder ein einwertiges organisches Radikal mit 1 bis 50 C-Atomen; oder T" und T' bilden zusammen eine zweiwertige organische Verbindungsgruppe, die, zusammen mit dem sterisch gehinderten Amin-Stickstoffatom und dem quaternären C-Atom substituiert durch G₁ und G₂, eine optional substituierte Fünf- oder Sechsring Struktur bilden, und
R₄ ist Wasserstoff, C₁-C₁₈-Alkyl, Phenyl, ein Alkalimetallion oder ein Tetraalkylammonium-Kation;
R₅ und R₆ sind unabhängig voneinander Wasserstoff, C₁-C₁₈-Alkyl, C₂-C₁₈-Alkyl substituiert durch Hydroxy oder, zusammen genommen, formen eine C₂-C₁₂-Alkylen-Brücke oder eine C₂-C₁₂-Alkylen-Brücke unterbrochen von -O- oder/und -N(R₁₈)-;
R₇ ist Wasserstoff, C₁-C₁₈-Alkyl oder C₆-C₁₀-Aryl;
R₈ ist Wasserstoff, C₁-C₁₈-Alkyl oder C₂-C₁₈-Hydroxyalkyl;
R₉ ist C₁-C₁₂-Alkylen oder eine Bindung;
R₁₈ ist C₁-C₁₂-Alkyl oder Phenyl, unsubstituiert oder substituiert durch Halogen, OH, COOR₂₁ oder C(O)-R₂₂;
R₂₁ ist Wasserstoff, ein Alkalimetallatom oder C₁-C₁₈-Alkyl;
- R₂₂: ist C₁-C₁₈-Alkyl;
und als Komponente (C) ein thermoplastisches Polymer.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenylethylen, Phenyl-propylen oder Phenyl-butylen.
Bevorzugt beträgt die mittlere Partikelgröße d₅₀ von Komponente (A) kleiner 10 µm.
Besonders bevorzugt beträgt die mittlere Partikelgröße d₅₀ von Komponente (A) kleiner 5 µm.
Bevorzugt bedeutet E C₆₀- bis C₁₀₀₀₀₀₀-Alkyl.
Bevorzugt sind bei Komponente (A) R¹ und R² jeweils Ethylen.

Bevorzugt ist bei Komponente (A) M gleich Aluminium.

Bevorzugt ist eine Zusammensetzung bei der Komponente B ein Reaktionsprodukt aus einem Fettsäure-2,2,6,6-tetramethylpiperidin-4-yl-hexadecanoat und 2,2,6,6-tetramethylpiperidin-4-yl-octadecanoat mit einem oxidierten Polyethylen der allgemeinen Struktur 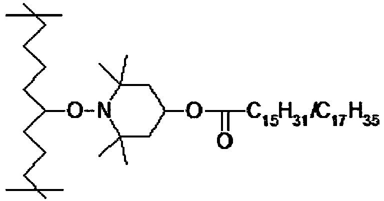 bedeutet, wobei C_{15/17} die Hauptkomponenten sind, und der Alkylrest am N-O-eine mittlere Molmasse von etwa 2000 aufweist (CAS-Nr. 86403-32-9).

Bevorzugt enthält die Zusammensetzung die Komponente (A) in 0,2 bis 10 Gew.-%, die Komponente (B) in 0,1 bis 5 Gew.-% und die Komponente (C) in 85 bis 99,7 Gew.-%.

Besonders bevorzugt enthält die Zusammensetzung die Komponente (A) in 0,5 bis 5 Gew.-%, die Komponente (B) in 0,2 bis 2 Gew.-% und die Komponente (C) in 93 bis 99,3 Gew.-%.

Insbesondere enthält die Zusammensetzung die Komponente (A) in 0,2 bis 2 Gew.-%, die Komponente (B) in 0,5 bis 2 Gew.-% und die Komponente (C) in 96 bis 99,7 Gew.-%.

Bevorzugt handelt es sich bei dem thermoplastischen Polymer um ein Polyolefin.

Bevorzugt wird die Zusammensetzung zu einer transparenten Folie der Dicke 50 - 500 µm verarbeitet.

Die Erfindung umfasst schließlich auch Formkörper, Filme und Fasern hergestellt mit der Zusammensetzung nach einem oder mehreren der Ansprüche 1 bis 12.

Bevorzugt wird die Teilchengröße des Phosphinats durch einen Mahlungs- und Sichtungsprozess eingestellt.

Besonders bevorzugt ist E C₅-C₆ Cycloalkyl.

Besonders bevorzugt ist E C₆₀- bis C₁₀₀₀₀₀₀-Alkyl.

Bevorzugt handelt es sich bei E um ein Wachs.

Es wurde nun überraschend gefunden, das Mischungen aus feinteiligen Phosphinsäuresalzen mit einer Teilchengröße d95 < 20 µm mit Aminoether-Verbindungen der Struktur R-O-N mit R gleich Alkylgruppe und N gleich sterisch gehindertem Amin in Polyolefinfolien sehr wirksame Flammschutzmittel sind, und die Folien transparent und lichtbeständig sind. Die Verbindungen sind thermisch stabil und zeigen keine Verfärbungs- oder Geruchsprobleme bei der Einarbeitung in Polymere. Die R-O-N-Verbindungen sind bevorzugt hochmolekular und zeigen deshalb keine Neigung zur Migration aus den Kunststoffen.

Wachse sind natürlich oder künstlich gewonnene Stoffe, die bei 20 °C fest und knetbar und über 40 °C ohne Zersetzung schmelzend und niedrigviskos sind. Wachse gehen in der Regel zwischen 50 und 90 °C, in Ausnahmefällen auch bis zu etwa 200 °C, in den schmelzflüssigen, niedrigviskosen Zustand über. Man unterscheidet natürliche Wachse wie Carnaubawachs, chemisch modifizierte Wachse wie Montanesterwachse und synthetische Wachse wie Polyethylenwachse..

Bevorzugt handelt es sich bei den Wachsen um Kohlenwasserstoffwachse, Esterwachse, oxidierte Polyolefinwachse, oxidierte Kohlenwasserstoffwachse, Amidwachse, Wachssäuren, Wachsseifen, natürliche Wachse und/oder Kombinationen dieser Komponenten.

Als natürliche Wachse kommen beispielsweise Pflanzenwachse wie Carnauba- oder Candelillawachs oder Wachse tierischer Herkunft wie z. B. Schellackwachs in Frage.

Weiterhin können, polare oder unpolare vollsynthetische Wachse, z. B. Polyolefinwachse eingesetzt werden. Unpolare Polyolefinwachse können durch thermischen Abbau verzweigter oder unverzweigter Polyolefin-Kunststoffe oder durch direkte Polymerisation von Olefinen hergestellt werden.

Polare Polyolefinwachse entstehen durch entsprechende Modifizierung von unpolaren Wachsen, z. B. durch Oxidation mit Luft oder durch Aufpfropfung polarer Olefinmonomere, beispielsweise α,β-ungesättigter Carbonsäuren und/oder deren Derivaten, etwa Acrylsäure oder Maleinsäureanhydrid. Ferner können polare Polyolefinwachse durch Copolymerisation von Ethylen mit polaren Comonomeren, beispielsweise Vinylacetat oder Acrylsäure hergestellt werden; weiterhin durch oxidativen Abbau von höhermolekularen, nicht wachsartigen Ethylen-Homo- und Copolymeren. Entsprechende Beispiele finden sich etwa in Ullmann's Encyclopedia of Industrial Chemistry, 5. Aufl., Vol. A 28, Weinheim 1996, Kap. 6.1.5.

Als Polyolefinwachse kommen Abbauwachse, hergestellt durch thermischen Abbau von Ethylen oder 1-Olefin-Homo- und Copolymerisaten, z. B. Polyethylen oder Polypropylen, in Frage.

Geeignet sind ferner durch Modifizierung der vorgenannten Polyolefinwachse hergestellte polare Wachse. Die Modifizierung erfolgt nach grundsätzlich bekannten Verfahren z. B. durch Oxidation mit sauerstoffhaltigen Gasen, beispielsweise Luft und/oder durch Pfropfung mit α,β-ungesättigten Säuren oder deren Derivaten wie beispielsweise Acrylsäure, Acrylsäureester, Maleinsäureanhydrid, Maleinsäurem

Im Speziellen, betrifft die aktuelle Erfindung die Verwendung einer synergistischen Mischung aus feinteiligem Phosphinat mit Aminoethern der Formel D und D' als Flammschutzmittel und Multifunktionsadditiv, 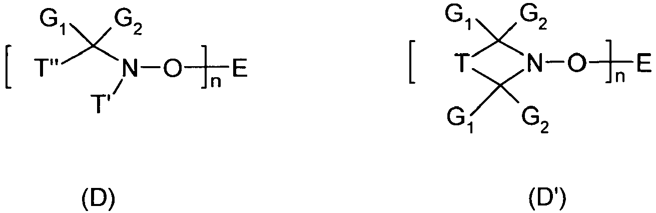 wobei n 1 bis 50 sein kann.

E ist C₁ bis C₁₀₀₀₀₀₀ Alkyl oder C₅-C₆ -Cycloalkyl, wobei die Alkylkette Alkylsubstituenten, aromatische Substituenten und polare Gruppen als Substituenten enthalten kann.

Die Alkylkette kann auch durch Alkeneinheiten und Heteroatome unterbrochen sein.

Spezielle Beispiele für erfindungsgemäße Aminoether sind

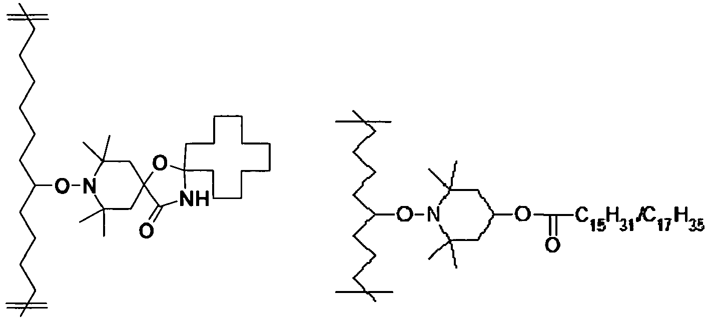

Die Aminoether aus Wachs (E) und sterisch gehindertem Amin sind thermisch stabil, zersetzen die Polymeren weder bei der Verarbeitung noch beeinflussen sie den Herstellprozess der Kunststoff-Formmassen. Die Umsetzungsprodukte aus Wachs und sterisch gehindertem Amin sind unter den üblichen Herstellungs- und Verarbeitungsbedingungen für thermoplastische Polymere nicht flüchtig und neigen nicht zu Migration aus dem Kunststoff.

Erfindungsgemäß einsetzbare Polymere sind thermoplastische Polymere.

Unter thermoplastischen Polymeren (Komponente C) werden laut Hans Domininghaus in "Die Kunststoffe und ihre Eigenschaften", 5. Auflage (1998), Seiten 14 - 25, Polymere verstanden, deren Molekülketten keine oder auch mehr oder weniger lange und in der Anzahl unterschiedliche Seitenverzweigungen aufweisen, die in der Wärme erweichen und nahezu beliebig formbar sind.

Bevorzugt handelt es sich bei den Polymeren um, um Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol 143E (BASF), Poly-(p-methylstyrol), Poly-(alpha -methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. AcrylnitrilButadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie
Polyamid 2/12,
Polyamid 4 (Poly-4-aminobuttersäure, Nylon 4, Fa. DuPont),
Polyamid 4/6 (Poly(tetramethylen-adipamid), Poly-(tetramethylen-adipinsäurediamid), Nylon 4/6, Fa. DuPont),
Polyamid 6 (Polycaprolactam, Poly-6-aminohexansäure, Nylon 6, Fa. DuPont, Akulon K122, Fa. DSM; Zytel 7301, Fa. DuPont; Durethan B 29, Fa. Bayer),
Polyamid 6/6 ((Poly(N,N'-hexamethyleneadipinediamid), Nylon 6/6 , Fa. DuPont, Zytel 101, Fa. DuPont; Durethan A30, Durethan AKV, Durethan AM, Fa. Bayer; Ultramid A3, Fa BASF),
Polyamid 6/9 (Poly(hexamethylen nonanediamid), Nylon 6/9 , Fa. DuPont),
Polyamid 6/10 (Poly(hexamethylen sebacamid), Nylon 6/10 , Fa. DuPont),
Polyamid 6/12 (Poly(hexamethylene dodecanediamid), Nylon 6/12 , Fa. DuPont),
Polyamid 6/66 (Poly(hexamethylene adipamide-co-caprolactam), Nylon 6/66 , Fa. DuPont),
Polyamid 7 (Poly-7-aminoheptansäure, Nylon 7, Fa. DuPont),
Polyamid 7,7 (Polyheptamethylenpimelamid, Nylon 7,7, Fa. DuPont), Polyamid 8 (Poly-8-aminooctansäure, Nylon 8, Fa. DuPont),
Polyamid 8,8 (Polyoctamethylensuberamid, Nylon 8,8, Fa. DuPont),
Polyamid 9 (Poly-9-aminononansäure, Nylon 9, Fa. DuPont),
Polyamid 9,9 (Polynonamethylenazelamid, Nylon 9,9, Fa. DuPont),
Polyamid 10 (Poly-10-amino-decansäure, Nylon 10, Fa. DuPont),
Polyamid 10,9 (Poly(decamethylenazelamid), Nylon 10,9, Fa. DuPont),
Polyamid 10,10 (Polydecamethylensebacamid, Nylon 10,10, Fa. DuPont),
Polyamid 11 (Poly-11-aminoundecansäure, Nylon 11, Fa. DuPont),
Polyamid 12 (Polylauryllactam, Nylon 12 , Fa. DuPont, Grillamid L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, lonomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex 2500, Celanex 2002, Fa Celanese; Ultradur, Fa. BASF), Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate.

Bevorzugt handelt es sich bei den Polymeren um Polysulfone, Polyethersulfone und Polyetherketone.

Bevorzugt handelt es sich bei den Polymeren um Mischungen (Polyblends) der vorgenannten Polymeren, wie z. B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugt handelt es sich bei den Polymeren um Polyolefine wie Polyethylen, Polypropylen oder Ethylenvinylacetat.

Die Polymer-Formkörper, -Filme, -Fäden und -Fasern sind dadurch gekennzeichnet, dass es sich um Polyolefine wie Polyethylen, Polypropylen, Ethylenvinylacetat handelt.

Die Polymer-Filme sind dadurch gekennzeichnet, dass sie transparent sind.

Zur Verarbeitung werden die Komponenten A und B als Pulver und/oder Granulat in einem Mischer vorgemischt und anschließend in einem Compoundieraggregat (z. B. einem Doppelschneckenextruder) in der Polymerschmelze (entsprechend der Komponente C) homogenisiert. Die Schmelze wird üblicherweise als Strang abgezogen, gekühlt und granuliert. Die Komponenten A und B können auch separat über eine Dosieranlage direkt in das Compoundieraggregat eingebracht werden.

Es ist ebenso möglich, die Komponenten A und B einem fertigen Polmergranulat bzw. -pulver (Komponente C) beizumischen und die Mischung direkt z. B. auf einer Folienblasanlage zu verarbeiten.

Bevorzugt handelt es sich bei den Additiven um Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Füllstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel.

Die flammwidrigen Kunststoff-Formmassen eignen sich zur Herstellung von Formkörpern, Filmen, Fäden und Fasern, z. B. durch Spritzgießen, Extrudieren, Blasformen oder Verpressen.

Die erfindungsgemäßen Zusammensetzungen eignen sich insbesondere für Blasfolien. Blasfolien zeichnen sich aus durch eine außerordentlich starke Haltekraft der Folie sowie eine besonders hohe Durchstoß- und Weiterreißfestigkeit. Es gibt Folien die nur aus einer Schicht (sog. Mono-Blasfolie) bestehen und Folien die aus mehreren Schichten (sog. Coextrusionsblasfolie) gefertigt werden. Bei einer Coextrusionsblasfolie besteht die Möglichkeit, die positiven Eigenschaften verschiedener Materialien in einer Folie zu vereinen.

### Beispiele:

### Eingesetzte erfindungsgemäße Materialien:

### Komponente A

Exolit® OP 935, Aluminiumsalz der Diethylphosphinsäure, im Folgenden als Depal d502 - 3 µm bezeichnet, Teilchengröße d95 < 10 µm, Teilchengröße d50 2-3 µm, Clariant, Frankfurt, D

### Komponente B

Hostavin® NOW: 2,2,6,6-tetramethylpiperidin-4-yl-hexadecanoat und 2,2,6,6-tetramethylpiperidin-4-yl-octadecanoat, Reaktionsprodukt mit einem oxidierten Polyethylen Wachs, Clariant, Frankfurt, D, im Folgenden als Hals-NO-Wachs bezeichnet.

Flamestab® NOR 116 : 1,3-Propanediamine, N,N"-1,2Ethandiylbis-, Reaktionsprodukt mit Cyclohexane und dem peroxidiertem N-Butyl-2,2,6,6,-tetramethyl-4-piperidinamine-2,4,6-trochloro-1,3,5-triazine Reaktionsprodukt, CAS-Nr. 191680-81-6, Hersteller BASF, Ludwigshafen, D

### Komponente C

Sabic LDPE 2102 Z 500, Low density Polyethylen, MFR 1,7-2.2 g/10 min, Hersteller: Sabic, Geleen, Niederlande, im Folgenden als LDPE bezeichnet

### Zum Vergleich:

Exolit® OP 1230, Aluminiumsalz der Diethylphosphinsäure, im Folgenden als Depal d50 30 µm bezeichnet, Teilchengröße d95 < 100 µm, Teilchengröße d50 ca. 30 µm

Aflammit® PCO 800: Melaminsalz einer Phosphonsäure, Thor, Speyer, D

Das Vermischen von Polymer (Komponente c) und den Additiven (Komponente A, B und andere) erfolgte auf einer Arenz KL 1 Einschneckenextruder bei einer Temperatur von 180 - 210 °C und einer Drehzahl von 100 Upm.

Die Herstellung von Blasfolien von 200 bzw. 400 µm Dicke erfolgte auf eine Collin BL 180/400 Blasfolienanlage bei 160 - 200 °C.

Die Messung der Schwerentflammbarkeit der Folien erfolgte nach DIN 4102 B2 mit 190*90 mm großen Probekörpern, die vertikal eingespannt während 15 sek. mit einem Gasbrenner von 20 mm Flammenhöhe an der unteren Kante beflammt werden. Der Test ist bestanden, wenn während 20 Sekunden die Spitze der Flammen eine Referenzmarke auf den Probekörpern in 150 mm Abstand von der beflammten Unterkante nicht erreicht.

Die Tabelle 1 zeigt die Brandtest Ergebnisse der 200 und 400 µm dicken Folien mit Exolit OP 935 und Hostavin NOW allein (V1 und V2) und die erfindungsgemäßen Kombinationen von Exolit OP 935 und Hostavin NOW (B1-B3). Die Brandprüfung DIN 4102 B2 wird bei 200 und 400 µm nur bestanden mit einer Kombination aus beiden Produkten.

**Tabelle 1: Brandprüfungen nach DIN 4102 B2 an 200 und 400 µm LDPE Folien**

| Beispiele | V1 | V2 | B1 | B2 | B3 |
|---|---|---|---|---|---|
| LDPE | 98 | 98 | 98 | 98 | 98 |
| Hals-NO-Wachs | 2 | | 1 | 1,5 | 0,5 |
| Depal d50 2-3 µm | | 2 | 1 | 0,5 | 1,5 |
| DIN 4102 Brandtest 200 µm | nein | nein | ja | ja | nein |
| DIN 4102 Brandtest 400 µm | nein | nein | ja | ja | nein |

**Tabelle 2: Vergleichsformulierungen**

| Beispiel | B2 | B3 | V3 | V4 | V5 |
|---|---|---|---|---|---|
| LDPE | 98 | 98 | 98 | | |
| Hals-NO-Wachs | 1,5 | | 1,5 | 0,5 | |
| Flamestab NOR 116 | | 1,5 | | | 0,5 |
| Aflammit PCO 800 | | | 0,5 | 2,5 | 2,5 |
| Depal d50 2-3 µm | 0,5 | 0,5 | | | |
| DIN 4102 B2 200 µm | ja | ja | nein | ja | ja |
| Transparenz | klar | klar | trüb | trüb | trüb |
| Geruch | nein | unangenehm | nein | nein | unangenehm |
| Farbe | farblos | gelblich | farblos | farblos | gelblich |

In Tabelle 2 wird die erfindungsgemäße Kombination aus feinteiligem Phosphinatsalz und Aminoether verglichen mit einer Kombination aus Phosphonat und mit einem Aminoether nach WO 2010/026230 (V3, V4, V5). Nur durch die erfindungsgemäße Kombination von feinteiligem Phosphinat mit Aminoether werden transparente Folien erhalten. Durch die Verwendung von Hals-NO-Wachs werden auch Verfärbungen und unangenehmer Geruch bei der Verarbeitung verhindert.

Aus Tabelle 3 wird deutlich, dass nur durch die Kombination aus Aminoether mit feinteiligem Phosphinat (B4, B5) transparente Polyethylenfolien erhalten werden.

**Tabelle 3: Vergleich Depal feinteilig und normale Teilchengröße**

| Beispiel | V6 | B4 | V7 | B5 | V8 |
|---|---|---|---|---|---|
| LDPE | 100 | 98 | 98 | 98 | 98 |
| Hals-NO-Wachs | | 1 | 1 | | |
| Flamestab NOR 116 | | | | 1 | 1 |
| Depal d50 3 µm* | | 1 | | 1 | |
| Depal d50 30 µm** | | | 1 | | 1 |
| % Transmission | 88 | 87 | 85 | 87 | 85 |
| Transparenz (doppelt) | 66 | 63 | 59 | 66 | 59 |
| DE*ab | 0,03 | 0,33 | 0,76 | 0,29 | 0,81 |
| Haze (D1003-97)© | 16 | 16 | 20 | 16 | 35 |

Die Haze Zahl ist ein Maß für die Trübung der Folien. Die erfindungsgemäßen Kombinationen von NOR Hals mit feinteiligem Depal zeigen deutlich geringere Trübungswerte als die Vergleichsbeispiele mit normaler Depal Teilchengröße. Zudem zeigen die Folien mit feinteiligem Depal bessere mechanische Werte (Zugversuch). Die Transparenz der Folien mit feinteiligem Depal ist deutlich höher als mit Standard Material. DE*ab gibt den Grad an Verfärbung gegenüber einem Weißstandard an. Die erfindungsgemäßen Beispiele zeigen deutlich weniger Verfärbung als die Vergleichsbeispiele. Durch die Verwendung von feinteiligem Depal wird zudem das Brandverhalten positiv beeinflusst. Es erfüllen zwar alle vier Beispiele aus Tabelle 3 die B2 Klassifizierung, die Folien mit feinteiligem Depal zeigen aber deutlich kürzere Nachbrennzeiten und geringere zerstörte Bereiche.

## Patentansprüche

1. Zusammensetzung, enthaltend als Komponente (A) ein feinteiliges Phosphinsäuresalz der Formel (I) und/oder Diphosphinsäuresalz der Formel (II) und/oder deren Polymere, 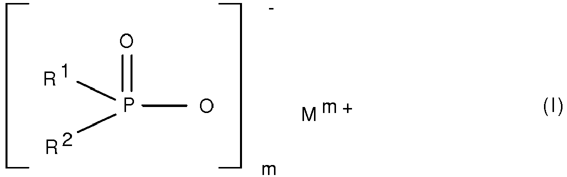 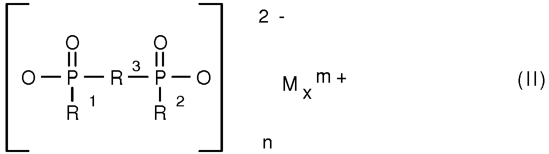 worin
R¹, R² gleich oder verschieden sind und Methyl, Ethyl, n-Propyl, iso-Propyl, n-Butyl, tert.-Butyl, n-Pentyl und/oder Phenyl bedeuten;
R³ C₁-C₁₀-Alkylen, linear oder verzweigt, C₅-C₁₀-Arylen, -Alkylarylen oder -Arylalkylen;
M Mg, Ca, Al, Sb, Sn, Ge, Ti, Fe, Zr, Ce, Bi, Sr, Mn, Li, Na, K und/oder eine protonierte Stickstoffbase;
m 1 bis 4; n 1 bis 4; x 1 bis 4 bedeuten,
mit einer Partikelgröße d₅₀ kleiner 20 µm;
als Komponent (B) einen Aminoether der Formel (III), 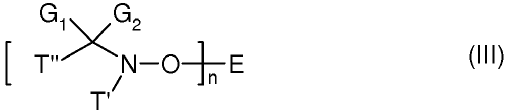 wobei
n kleiner oder gleich der Anzahl C-Atome in E sein kann und
E C₁- bis C₁₀₀₀₀₀₀-Alkyl oder C₅-C₆-Cycloalkyl bedeutet, wobei die Alkylkette Alkylsubstituenten, aromatische Substituenten und polare Gruppen als Substituenten enthalten kann, und durch Alkeneinheiten und/oder Heteroatome unterbrochen sein kann;
wobei
G1 und G2 gleich oder verschieden sein können und unabhängig voneinander Wasserstoff, Halogen, NO₂, Cyano, CONR₅R₆, (R₉)COOR₄, C(O)-R₇, OR₈, SR₈, NHR₈, N(R₁₈)₂, Carbamoyl, Di(C₁-C₁₈-alkyl)-carbamoyl, C(=NR₅)(NHR₆), C₁-C₁₈-Alkyl; C₃-C₁₈-Alkenyl; C₃-C₁₈-Alkinyl, C₇-C₉-Phenylalkyl, C₃-C₁₂-Cycloalkyl oder C₂-C₁₂-Heterocycloalkyl; C₂-C₁₈-Alkyl unterbrochen von wenigstens einem O-Atom und/oder von
-NR₅-;
C₆-C₁₀-Aryl;
Phenyl oder Naphthyl, jeweils substituiert durch C₁-C₄-Alkyl, C₁-C₄-Alkoxy, C₁-C₄-Alkylthio, Halogen, Cyano, Hydroxy, Carboxy, COOR₂₁, C(O)-R₂₂, C₁-C₄-Alkylamino oder Di(C₁-C₄-alkyl)amino;
bedeuten; oder
G1 und G2 zusammen mit C-Atom, an dem sie gebunden sind, einen C₃-C₁₂-Ring bilden;
T' ist Wasserstoff, eine primäre C₁-C₁₈Alkyl-, eine sekundäre C₃-C₁₈Alkyl-, eine tertiäre C₄-C₁₈-Alkyl- oder eine Phenyl-Gruppe, jede davon unsubstituiert oder substituiert mit Halogen, OH, COOR₂₁ oder C(O)-R₂₂; oder C₅-C₁₂-Cycloalkyl oder C₅-C₁₂-Cycloalkyl unterbrochen durch wenigstens ein O oder -N(R₁₈)-; oder ein polycyclisches Alkylradikal mit 7 bis 18 C-Atomen, oder das gleiche Radikal, unterbrochen durch wenigstens ein -O- oder -N(R₁₈)-; oder T' ist C-(G₁)(G₂)-T";
T" ist Wasserstoff, Halogen, NO₂, Cyano oder ein einwertiges organisches Radikal mit 1 bis 50 C-Atomen; oder T" und T' bilden zusammen eine zweiwertige organische Verbindungsgruppe, die, zusammen mit dem sterisch gehinderten Amin-Stickstoffatom und dem quaternären C-Atom substituiert durch G₁ und G₂, eine optional substituierte Fünf- oder Sechsring Struktur bilden, und
R₄ ist Wasserstoff, C₁-C₁₈-Alkyl, Phenyl, ein Alkalimetallion oder ein Tetraalkylammonium-Kation;
R₅ und R₆ sind unabhängig voneinander Wasserstoff, C₁-C₁₈-Alkyl, C₂-C₁₈-Alkyl substituiert durch Hydroxy oder, zusammen genommen, formen eine C₂-C₁₂-Alkylen-Brücke oder eine C₂-C₁₂-Alkylen-Brücke unterbrochen von -O- oder/und -N(R₁₈)-;
R₇ ist Wasserstoff, C₁-C₁₈-Alkyl oder C₅-C₁₀-Aryl;
R₈ ist Wasserstoff, C₁-C₁₈-Alkyl oder C₂-C₁₈-Hydroxyalkyl;
R₉ ist C₁-C₁₂-Alkylen oder eine Bindung;
R₁₈ ist C₁-C₁₂-Alkyl oder Phenyl, unsubstituiert oder substituiert durch Halogen, OH, COOR₂₁ oder C(O)-R₂₂;
R₂₁ ist Wasserstoff, ein Alkalimetallatom oder C₁-C₁₈-Alkyl;
R₂₂ ist C₁-C₁₈-Alkyl;
und als Komponente (C) ein thermoplastisches Polymer

2. Mischungen nach Anspruch 1, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen bedeutet.

3. Mischungen nach einem oder mehreren der Ansprüche 1 bis 2, **dadurch gekennzeichnet, dass** die mittlere Partikelgröße d₅₀ von Komponente (A) kleiner 10 µm beträgt.

4. Mischungen nach einem oder mehreren der Ansprüche 1 bis 3, **dadurch gekennzeichnet, dass** die mittlere Partikelgröße d₅₀ von Komponente (A) kleiner 5 µm beträgt.

5. Mischungen nach einem oder mehreren der Ansprüche 1 bis 4, **dadurch gekennzeichnet, dass** die E C₆₀- bis C₁₀₀₀₀₀₀-Alkyl bedeutet.

6. Mischungen nach einem oder mehreren der Ansprüche 1 bis 5, **dadurch gekennzeichnet, dass** bei Komponente (A) R¹ und R² jeweils Ethylen sind.

7. Mischungen nach einem oder mehreren der Ansprüche 1 bis 6, **dadurch gekennzeichnet, dass** bei Komponente (A) M gleich Aluminium ist.

8. Mischungen nach einem oder mehreren der Ansprüche 1 bis 7, **dadurch gekennzeichnet dass** Komponente B ein Reaktionsprodukt aus einem Fettsäure-2,2,6,6-tetramethylpiperidin-4-yl-hexadecanoat und 2,2,6,6-tetramethylpiperidin-4-yl-octadecanoat mit einem oxidierten Polyethylen der allgemeinen Struktur 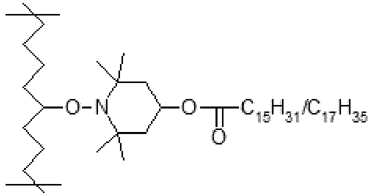 bedeutet, wobei C_{15/17} die Hauptkomponenten sind, und der Alkylrest am N-O-eine mittlere Molmasse von etwa 2000 aufweist.

9. Mischungen nach einem oder mehreren der Ansprüche 1 bis 8, **dadurch gekennzeichnet, dass** sie die Komponente (A) in 0,2 bis 10 Gew.-%, Komponente (B) in 0,1 bis 5 Gew.-% und Komponente (C) in 85 bis 99,7 Gew.-% enthält.

10. Mischungen nach einem oder mehreren der Ansprüche 1 bis 8, **dadurch gekennzeichnet, dass** sie die Komponente (A) in 0,5 bis 5 Gew.-%, Komponente (B) in 0,2 bis 2 Gew.-% und Komponente (C) in 93 bis 99,3 Gew.-% enthält.

11. Mischungen nach einem oder mehreren der Ansprüche 1 bis 8, **dadurch gekennzeichnet, dass** sie der Komponente (A) in 0,2 bis 2 Gew.-%, Komponente (B) in 0,5 bis 2 Gew.-% und Komponente (C) in 96 bis 99,7 Gew.-% enthält.

12. Mischungen nach einem oder mehreren der Ansprüche 1 bis 11, **dadurch gekennzeichnet, dass** das thermoplastische Polymer ein Polyolefin ist.

13. Mischungen nach einem oder mehreren der Ansprüche 1 bis 12, **dadurch gekennzeichnet, dass** sie zu einer transparenten Folie der Dicke 50 - 500 µm verarbeitet wird.

14. Formkörper, Filme und Fasern hergestellt mit der Mischung nach einem oder mehreren der Ansprüche 1 bis 12.

## Claims

1. Composition comprising as component (A) a finely divided phosphinic acid salt of formula (I) and/or diphosphinic acid salt of formula (II) and/or polymers thereof, 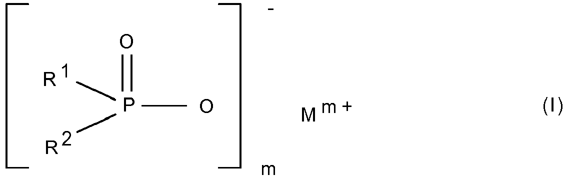 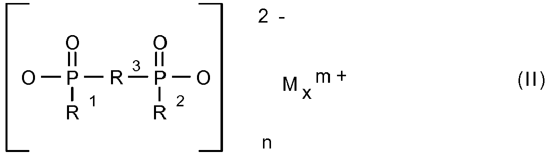 where
R¹, R² are identical or different and are methyl, ethyl, n-propyl, isopropyl, n-butyl, tert-butyl, n-pentyl and/or phenyl;
R³ is C₁-C₁₀-alkylene, linear or branched, C₆-C₁₀-arylene, -alkylarylene or -arylalkylene;
M is Mg, Ca, Al, Sb, Sn, Ge, Ti, Fe, Zr, Ce, Bi, Sr, Mn, Li, Na, K and/or a protonated nitrogen base;
m is 1 to 4; n is 1 to 4, x is 1 to 4,
having a particle size d₅₀ of less than 20 µm;
as component (B) an amino ether of formula (III), 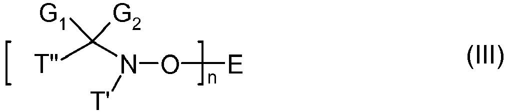 wherein
n may be less than or equal to the number of carbon atoms in E and
E is C₁- to C₁₀₀₀₀₀₀-alkyl or C₅-C₆-cycloalkyl, **characterized in that** the alkyl chain may comprise alkyl substituents, aromatic substituents and polar groups as substituents and may be interrupted by alkene units and/or heteroatoms;
wherein
G1 and G2 may be identical or different and independently of one another are hydrogen, halogen, NO₂, cyano, CONR₅R₆, (R₉)COOR₄, C(O)-R₇, OR₈, SR₈, NHR₈, N(R₁₈)₂, carbamoyl, di(C₁-C₁₈-alkyl)carbamoyl, C(=NR₅)(NHR₆), C₁-C₁₈-alkyl; C₃-C₁₈-alkenyl; C₃-C₁₈-alkynyl, C₇-C₉-phenylalkyl, C₃-C₁₂-cycloalkyl or C₂-C₁₂-heterocycloalkyl;
C₂-C₁₈-alkyl interrupted by at least one O atom and/or by
-NR₅-;
C₆-C₁₀-aryl;
phenyl or naphthyl, in each case substituted with C₁-C₄-alkyl, C₁-C₄-alkoxy, C₁-C₄-alkylthio, halogen, cyano, hydroxy, carboxy, COOR₂₁, C(O)-R₂₂, C₁-C₄-alkylamino or di(C₁-C₄-alkyl)amino;
or
G1 and G2 together with the carbon atom to which they are bonded form a C₃-C₁₂-ring;
T' is hydrogen, a primary Ci-Cis-alkyl, a secondary C₃-C₁₈-alkyl, a tertiary C₄-C₁₈-alkyl or a phenyl group, each of which is unsubstituted or substituted with halogen, OH, COOR₂₁ or C(O)-R₂₂; or C₅-C₁₂-cycloalkyl or C₅-C₁₂-cycloalkyl interrupted by at least one O or - N(R₁₈)-; or a polycyclic alkyl radical having 7 to 18 carbon atoms, or the identical radical interrupted by at least one -O- or -N(R₁₈)-; or T' is C-(G₁)(G₂)-T";
T" is hydrogen, halogen, NO₂, cyano or a monovalent organic radical having 1 to 50 carbon atoms; or T" and T' together form a divalent organic connecting group which, together with the sterically hindered amine nitrogen atom and the quaternary carbon atom substituted with G₁ and G₂, form an optionally substituted five- or six-membered ring structure, and
R₄ is hydrogen, C₁-C₁₈-alkyl, phenyl, an alkali metal ion or a tetraalkylammonium cation;
R₅ and R₆ are independently of each other hydrogen, C₁-C₁₈-alkyl, C₂-C₁₈-alkyl substituted with hydroxy or, taken together, form a C₂-C₁₂-alkylene bridge or a C₂-C₁₂-alkylene bridge interrupted by -O- or/and -N(R₁₈)-;
R₇ is hydrogen, C₁-C₁₈-alkyl or C₆-C₁₀-aryl;
R₈ is hydrogen, C₁-C₁₈-alkyl or C₂-C₁₈-hydroxyalkyl;
R₉ is C₁-C₁₂-alkylene or a bond;
R₁₈ is C₁-C₁₂-alkyl or phenyl, unsubstituted or substituted by halogen, OH, COOR₂₁ or C(O)-R₂₂;
R₂₁ is hydrogen, an alkali metal atom or C₁-C₁₈-alkyl;
R₂₂ is C₁-C₁₈-alkyl;
and as component (C) a thermoplastic polymer.

2. Mixtures according to Claim 1, **characterized in that** R³ is methylene, ethylene, n-propylene, isopropylene, n-butylene, tert-butylene, n-pentylene, n-octylene or n-dodecylene; phenylene or naphthylene; methylphenylene, ethylphenylene, tert-butylphenylene, methylnaphthylene, ethylnaphthylene or tert-butylnaphthylene; phenylmethylene, phenylethylene, phenylpropylene or phenylbutylene.

3. Mixtures according to either of Claims 1 and 2, **characterized in that** the average particle size d₅₀ of component (A) is less than 10 µm.

4. Mixtures according to one or more of Claims 1 to 3, **characterized in that** the average particle size d₅₀ of component (A) is less than 5 µm.

5. Mixtures according to one or more of Claims 1 to 4, **characterized in that** E is C₆₀- to C₁₀₀₀₀₀₀-alkyl.

6. Mixtures according to one or more of Claims 1 to 5, **characterized in that** in component (A) R¹ and R² are each ethylene.

7. Mixtures according to one or more of Claims 1 to 6, **characterized in that** in component (A) M is aluminium.

8. Mixtures according to one or more of Claims 1 to 7, **characterized in that** component B is a reaction product of a fatty acid 2,2,6,6-tetramethylpiperidin-4-yl-hexadecanoate and 2,2,6,6-tetramethylpiperidin-4-yl-octadecanoate with an oxidized polyethylene of the formula 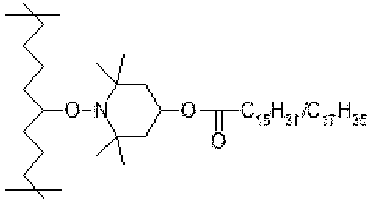 wherein C_{15/17} are the main components and the alkyl radical at the N-O- has an average molecular weight of about 2000.

9. Mixtures according to one or more of Claims 1 to 8, **characterized in that** said mixture comprises 0.2 to 10 wt% of component (A), 0.1 to 5 wt% of component (B) and 85 to 99.7 wt% of component (C).

10. Mixtures according to one or more of Claims 1 to 8, **characterized in that** said mixture comprises 0.5 to 5 wt% of component (A), 0.2 to 2 wt% of component (B) and 93 to 99.3 wt% of component (C).

11. Mixtures according to one or more of Claims 1 to 8, **characterized in that** said mixture comprises 0.2 to 2 wt% of component (A), 0.5 to 2 wt% of component (B) and 96 to 99.7 wt% of component (C).

12. Mixtures according to one or more of Claims 1 to 11, **characterized in that** the thermoplastic polymer is a polyolefin.

13. Mixtures according to one or more of Claims 1 to 12, **characterized in that** said mixture is processed into a transparent sheeting of 50-500 µm in thickness.

14. Molded articles, films or fibres produced with the mixture according to one or more of Claims 1 to 12.

## Revendications

1. Composition, contenant en tant que composant (A) un sel de l'acide phosphinique de formule (I) et/ou un sel de l'acide diphosphinique de formule (II) et/ou leurs polymères finement divisés 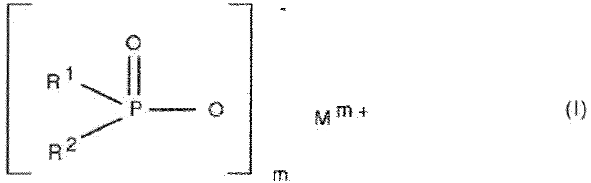 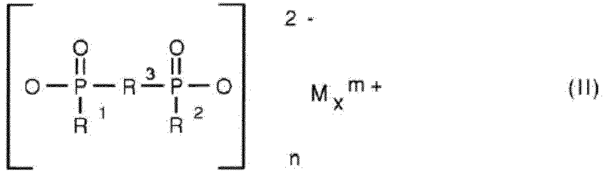 dans lesquelles
R¹, R² sont identiques ou différents, et signifient méthyle, éthyle, n-propyle, iso-propyle, n-butyle, tert.-butyle, n-pentyle et/ou phényle ;
R³ signifie alkylène en C₁-C₁₀, linéaire ou ramifié, arylène, alkylarylène ou arylalkylène en C₆-C₁₀ ;
M signifie Mg, Ca, Al, Sb, Sn, Ge, Ti, Fe, Zr, Ce, Bi, Sr, Mn, Li, Na, K et/ou une base azotée protonée ;
m signifie 1 à 4 ; n signifie 1 à 4 ; x signifie 1 à 4,
ayant une taille de particule d₅₀ inférieure à 20 µm ;
en tant que composant (B) un aminoéther de formule (III) 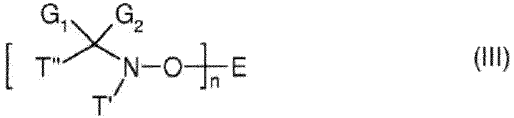 dans laquelle
n peut être inférieur ou égal au nombre d'atomes C dans E, et
E signifie alkyle en C₁ à C_{1 000 000} ou cycloalkyle en C₅-C₆, la chaîne alkyle pouvant contenir des substituants alkyle, des substituants aromatiques et des groupes polaires en tant que substituants, et pouvant être interrompue par des unités alcène et/ou des hétéroatomes ;
G1 et G2 peuvent être identiques ou différents, et signifient indépendamment l'un de l'autre hydrogène, halogène, NO₂, cyano, CONR₅R₆, (R₉)COOR₄, C(O)-R₇, OR₈, SR₈, NHR₈, N(R₁₈)₂, carbamoyle, di(alkyle en C₁-C₁₈)-carbamoyle, C(=NR₅)(NHR₆), alkyle en C₁-C₁₈, alcényle en C₃-C₁₈, alcynyle en C₃-C₁₈, phénylalkyle en C₇-C₉, cycloalkyle en C₃-C₁₂ ou hétérocycloalkyle en C₂-C₁₂, alkyle en C₂-C₁₈ interrompu par au moins un atome 0 et/ou par
-NR₅- ;
aryle en C₆-C₁₀ ;
phényle ou naphtyle, chacun substitués par alkyle en C₁-C₄, alcoxy en C₁-C₄, alkylthio en C₁-C₄, halogène, cyano, hydroxy, carboxy, COOR₂₁, C(O)-R₂₂, alkylamino en C₁-C₄ ou di(alkyle en C₁-C₄)amino ;
ou
G1 et G2 forment ensemble avec l'atome C auquel ils sont reliés un cycle en C₃-C₁₂ ;
T' signifie l'hydrogène, un groupe alkyle en C₁-C₁₈ primaire, un groupe alkyle en C₃-C₁₈ secondaire, un groupe alkyle en C₄-C₁₈ tertiaire ou un groupe phényle, chacun non substitués ou substitués avec halogène, OH, COOR₂₁ ou C(O)-R₂₂ ; ou cycloalkyle en C₅-C₁₂ ou cycloalkyle en C₅-C₁₂ interrompu par au moins un O ou -N(R₁₈)- ; ou un radical alkyle polycyclique de 7 à 18 atomes C, ou le même radical, interrompu par au moins un -O-, ou - N(R₁₈)- ; ou T" signifie C-(G₁)(G₂)-T" ;
T" signifie hydrogène, halogène, NO₂, cyano ou un radical organique monovalent de 1 à 50 atomes C ; ou T" et T' forment ensemble un groupe de liaison organique bivalent, qui forme conjointement avec l'atome d'azote d'amine à encombrement stérique et l'atome C quaternaire substitué par G₁ et G₂ un cycle à cinq ou six chaînons éventuellement substitué, et
R₄ signifie hydrogène, alkyle en C₁-C₁₈, phényle, un ion de métal alcalin ou un cation tétraalkylammonium ;
R₅ et R₆ signifient indépendamment l'un de l'autre hydrogène, alkyle en C₁-C₁₈, alkyle en C₂-C₁₈ substitué par hydroxy, ou forment ensemble un pont alkylène en C₂-C₁₂ ou un pont alkylène en C₂-C₁₂ interrompu par -O- et/ou - N(R₁₈)- ;
R₇ signifie hydrogène, alkyle en C₁-C₁₈ ou aryle en C₆-C₁₀ ;
R₈ signifie hydrogène, alkyle en C₁-C₁₈ ou hydroxyalkyle en C₂-C₁₈ ;
R₉ signifie alkylène en C₁-C₁₂ ou une liaison ;
R₁₈ signifie alkyle en C₁-C₁₂ ou phényle, non substitués ou substitués par halogène, OH, COOR₂₁ ou C(O)-R₂₂ ;
R₂₁ signifie hydrogène, un atome de métal alcalin ou alkyle en C₁-C₁₈ ;
R₂₂ signifie alkyle en C₁-C₁₈ ;
et en tant que composant (C) un polymère thermoplastique.

2. Mélanges selon la revendication 1, **caractérisés en ce que** R³ signifie méthylène, éthylène, n-propylène, iso-propylène, n-butylène, tert.-butylène, n-pentylène, n-octylène ou n-dodécylène ; phénylène ou naphtylène ; méthyl-phénylène, éthyl-phénylène, tert.-butylphénylène, méthyl-naphtylène, éthyl-naphtylène ou tert.-butylnaphtylène ; phényl-méthylène, phényl-éthylène, phényl-propylène ou phényl-butylène.

3. Mélanges selon une ou plusieurs des revendications 1 à 2, **caractérisés en ce que** la taille de particule moyenne d₅₀ du composant (A) est inférieure à 10 µm.

4. Mélanges selon une ou plusieurs des revendications 1 à 3, **caractérisés en ce que** la taille de particule moyenne d₅₀ du composant (A) est inférieure à 5 µm.

5. Mélanges selon une ou plusieurs des revendications 1 à 4, **caractérisés en ce que** E signifie alkyle en C₆₀ à C_{1 000 000}.

6. Mélanges selon une ou plusieurs des revendications 1 à 5, **caractérisés en ce que**, dans le composant (A), R¹ et R² signifient chacun éthylène.

7. Mélanges selon une ou plusieurs des revendications 1 à 6, **caractérisés en ce que**, dans le composant (A), M signifie l'aluminium.

8. Mélanges selon une ou plusieurs des revendications 1 à 7, **caractérisés en ce que** le composant B est un produit de réaction d'un 2,2,6,6-tétraméthylpipéridin-4-yl-hexadécanoate d'acide gras et d'un 2,2,6,6-tétraméthylpipéridin-4-yl-octadécanoate avec un polyéthylène oxydé de structure générale 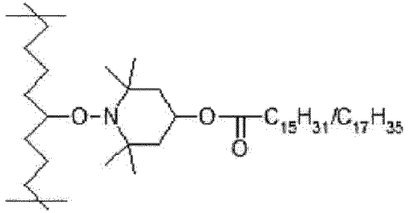 dans laquelle C_{15/17} sont les composants principaux et le radical alkyle sur N-O présente une masse molaire moyenne d'environ 2 000.

9. Mélanges selon une ou plusieurs des revendications 1 à 8, **caractérisés en ce qu'**ils contiennent le composant (A) à hauteur de 0,2 à 10 % en poids, le composant (B) à hauteur de 0,1 à 5 % en poids et le composant (C) à hauteur de 85 à 99,7 % en poids.

10. Mélanges selon une ou plusieurs des revendications 1 à 8, **caractérisés en ce qu'**ils contiennent le composant (A) à hauteur de 0,5 à 5 % en poids, le composant (B) à hauteur de 0,2 à 2 % en poids et le composant (C) à hauteur de 93 à 99,3 % en poids.

11. Mélanges selon une ou plusieurs des revendications 1 à 8, **caractérisés en ce qu'**ils contiennent le composant (A) à hauteur de 0,2 à 2 % en poids, le composant (B) à hauteur de 0,5 à 2 % en poids et le composant (C) à hauteur de 96 à 99,7 % en poids.

12. Mélanges selon une ou plusieurs des revendications 1 à 11, **caractérisés en ce que** le polymère thermoplastique est une polyoléfine.

13. Mélanges selon une ou plusieurs des revendications 1 à 12, **caractérisés en ce qu'**ils sont transformés en une feuille transparente d'une épaisseur de 50 à 500 µm.

14. Corps moulés, films et fibres fabriqués avec le mélange selon une ou plusieurs des revendications 1 à 12.
